(19) Europäisches Patentamt

European Patent Office

Office européen des brevets

(11) **EP 1 151 571 B1**

(12) **EUROPÄISCHE PATENTSCHRIFT**

(45) Veröffentlichungstag und Bekanntmachung des Hinweises auf die Patenterteilung:
**26.05.2004 Patentblatt 2004/22**

(21) Anmeldenummer: **00908975.6**

(22) Anmeldetag: **01.02.2000**

(51) Int Cl.⁷: $H04L\ 1/00$, $H04L\ 25/03$

(86) Internationale Anmeldenummer:
**PCT/DE2000/000292**

(87) Internationale Veröffentlichungsnummer:
**WO 2000/049758 (24.08.2000 Gazette 2000/34)**

(54) **VERFAHREN UND EINRICHTUNG ZUR ENTZERRUNG UND DEKODIERUNG EINES DATENSIGNALS**

METHOD AND DEVICE FOR EQUALIZING AND DECODING A DATA SIGNAL

PROCEDE ET DISPOSITIF PERMETTANT D'EGALISER ET DE DECODER UN SIGNAL DE DONNEES

(84) Benannte Vertragsstaaten:
**AT BE CH CY DE DK ES FI FR GB GR IE IT LI LU MC NL PT SE**

(30) Priorität: **18.02.1999 DE 19906865**

(43) Veröffentlichungstag der Anmeldung:
**07.11.2001 Patentblatt 2001/45**

(73) Patentinhaber: **Infineon Technologies AG 81669 München (DE)**

(72) Erfinder:
- **DOETSCH, Markus**
  **D-81539 München (DE)**
- **JUNG, Peter**
  **D-67697 Otterberg (DE)**
- **PLECHINGER, Jörg**
  **D-80469 München (DE)**
- **SCHMIDT, Peter**
  **D-67167 Erpolzheim (DE)**
- **SCHNEIDER, Michael**
  **D-81541 München (DE)**

(74) Vertreter: **Lange, Thomas, Dr. et al Patentanwälte Lambsdorff & Lange Dingolfinger Strasse 6 81673 München (DE)**

(56) Entgegenhaltungen:
**US-A- 5 214 675**

- **MIGNONE V ET AL: "CD3-OFDM: A NEW CHANNEL ESTIMATION METHOD TO IMPROVE THE SPECTRUM EFFICIENCY IN DIGITAL TERRESTRIAL TELEVISION SYSTEMS" INTERNATIONAL BROADCASTING CONVENTION 1994,14. September 1995 (1995-09-14), XP000617513**
- **RAPHAELI D ET AL: "COMBINED TURBO EQUALIZATION AND TURBO DECODING" IEEE COMMUNICATIONS LETTERS,US,IEEE SERVICE CENTER, PISCATAWAY,US, Bd. 2, Nr. 4, 1. April 1998 (1998-04-01), Seiten 107-109, XP000752598 ISSN: 1089-7798**
- **RYUJI KOHNO: "ADAPTIVE COMBINATION OF EQUALIZATION AND DECODING OF ERROR-CORRECTING CODES" PROCEEDINGS OF THE INTERNATIONAL CONFERENCE ON SYSTEMS ENGINEERING,US,NEW YORK, IEEE, Bd. -, 1992, Seiten 113-118, XP000343359 ISBN: 0-7803-0734-8**

**Beschreibung**

Die Erfindung betrifft Verfahren und Einrichtungen zur Entzerrung und Decodierung eines über einen Funkkanal übertragenen, fehlerschutzcodierten Datensignals.

Bei der Übertragung von Daten über einen Funkkanal, insbesondere Mobilfunkkanal treten besondere Schwierigkeiten auf, die damit zusammenhängen, daß sich die Übertragungseigenschaften des Funkkanals zeitlich ständig ändern und daß ein empfangenes Funksignal Störungen durch Funksignale anderer Mobilfunk-Teilnehmer erleidet.

Zur Berücksichtigung der ständigen Änderungen der Übertragungseigenschaften des Funkkanals werden empfängerseitig adaptive Entzerrer eingesetzt. Adaptive Entzerrer zeichnen sich dadurch aus, daß sie mit einem sogenannten Kanalschätzer ausgerüstet sind. Der Kanalschätzer ermittelt fortwährend die aktuellen Übertragungseigenschaften (Impulsantworten) des Funkkanals und teilt diese dem Entzerrer mit. Der Entzerrer ist dadurch in die Lage versetzt, eine "adaptive" (d.h. an den momentanen Zustand des Funkkanals angepaßte) Entzerrung des erhaltenen Empfangssignals durchzuführen.

Codierung/Decodierung des gesendeten/empfangenen Datenaignals wird zum Zwecke eines effektiven Fehlerschutzes der übertragenen Daten eingesetzt. Bei der senderseitigen Codierung wird dem Ausgangsdatensignal Redundanz hinzugefügt, die es dem Empfänger ermöglicht, bei der Datendetektion auftretende Detektionsfehler zu erkennen und zu korrigieren. Störeinflüsse können dadurch in ihrer Wirkung reduziert werden.

In dem Artikel "Combined Turbo Equalization and Turbo Decoding" von D. Raphaeli und Y. Zarai, IEEE Communications Letters, Bd. 2, Nr. 4, 1998, Seiten 107 bis 109 ist eine iterative Empfängerstruktur beschrieben, die zur adaptiven Kanal-Schätzung einen MAP-(Maximum a-posteriori)-Symbolschätzer und zur Decodierung einen nachgeschalteten Turbo-Decodierer umfaßt. Das von dem MAP-Symbolschätzer ausgegebene digitale Signal liegt im sogenannten LLR-(log-likelyhood ratio)-Format vor. Es wird am Eingang des Turbo-Decodierers durch Berechnung der Varianz des Kanalrauschens in ein von dem Decodierer benötigtes "weiches" (d.h. wertekontinuierliches) Eingangssignal umgerechnet.

In der U.S. Patentschrift 5,214,675 ist eine Anordnung bestehend aus einem linearen Entzerrer mit veränderbaren Entzerrerkoeffizienten und einem Kanaldecodierer beschrieben. Dem Kanaldecodierer ist eine Recheneinheit vorgeordnet, in welcher die Kanalstärke und die Varianz des Kanalrauschens berechnet werden. Die berechneten Werte werden dem Kanaldecodierer zugeleitet.

Der Erfindung liegt die Aufgabe zugrunde, ein Verfahren sowie eine Einrichtung zur Entzerrung und Decodierung eines fehlerschutzcodierten Datensignals anzugeben, welche eine vorgegebene Bit-Fehlerrate am Ausgang des Decodierers mit einem geringen Gesamtrechenaufwand bezogen auf die Schritte Entzerrung und Decodierung erreicht.

Zur Lösung der Aufgabe sind die Merkmale der unabhängigen Ansprüche 1 und 3 bzw. 7 und 9 vorgesehen.

Demnach betrifft die Erfindung generell Verfahren und Einrichtungen zum adaptiven Entzerren und zum "adaptiven" Decodieren eines empfangenen Signals, wobei für die Berechnung von ersten Kanalparametern für die adaptive Entzerrung und von zweiten Kanalparametern für die adaptive Decodierung jeweils ein erster bzw. zweiter Kanalschätzer vorgesehen sind.

Nach einem ersten Aspekt der Erfindung (Ansprüche 1 und 7) basiert die Berechnung der zweiten Kanalparameter für die Decodierung auf dem Verfahren der Momente (Method-of-moments).

Dieser Algorithmus ist besonders leistungsstark und übertrifft beispielsweise die mit einem MAP-Schätzer erreichten Resultate bei der Ermittlung der zweiten Kanalparameter. Da auf dieser Weise der Fehlerschutzgrad bei der Decodierung verbessert wird, kann andererseits der Rechenaufwand bei der Entzerrung reduziert werden, um ein vorgegebenes, maximal zulässiges Bit-Fehlerverhältnis des Ausgabesignals zu erreichen. Dies begünstigt den Einsatz aufwandsarmer, suboptimaler Entzerrer, was im folgenden noch näher erläutert wird.

Nach einem zweiten Aspekt der Erfindung werden die "nachgeschätzten" zweiten Kanalparameter zur Anpassung eines Turbo-Decodierers an die Kanalsituation eingesetzt. Bereits durch eine herkömmliche Turbocodierung/Decodierung wird eine hohe Fehlerschutzsicherheit eines Übertragungssignals erreicht. Durch die erfindungsgemäße Anpassbarkeit des eingesetzten Turbo-Decodierers an die aktuelle Kanalsituation wird die Leistungsfähigkeit der Turbo-Decodierung verbessert, was ähnlich wie beim ersten Aspekt der Erfindung die Möglichkeit einer aufwandsgünstigeren Entzerrung zur Erreichung eines vorgegebenen Bit-Fehlerverhältnisses des Ausgabesignals bietet.

Weitere vorteilhafte Ausgestaltungen der Erfindung sind in den Unteransprüchen angegeben.

Die Erfindung wird nachfolgend anhand eines Ausführungsbeispiels unter Bezugnahme auf die Zeichnung erläutert; in dieser zeigt:

Fig. 1    eine schematische Darstellung der Luftschnittstelle eines Mobilfunksystems mit Sender und Empfänger;

Fig. 2    ein Blockschaltbild eines rekursiven Faltungscodierers, wie er in dem Sender gemäß Fig. 1 zur Codierung eines ursprünglichen Eingabesignals verwendet werden kann;

Fig. 3  ein Blockschaltbild des in Fig. 1 dargestellten Demodulators;

Fig. 4  ein Blockschaltbild der in Fig. 1 dargestellten Decodiereinrichtung; und

Fig. 5  ein Blockschaltbild des in Fig. 4 dargestellten Turbo-Decodierers.

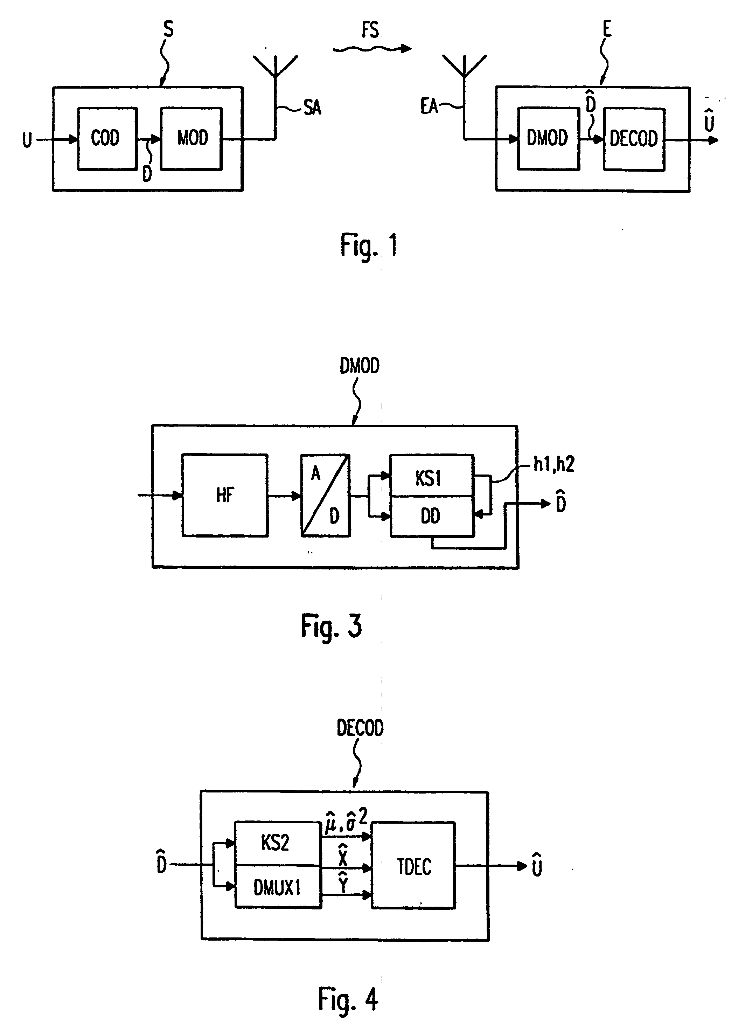

Fig. 1 zeigt einen Sender S und einen Empfänger E eines Mobilfunksystems. Der Sender S bzw. der Empfänger E können sowohl einer Basisstation als auch einer Mobilstation zugeordnet sein.

Der Sender S weist einen Codierer COD, einen Modulator MOD sowie eine Sendeantenne SA auf.

Der Codierer COD nimmt ein digitales Eingabesignal U in Form einer Folge von Datensymbolen (Bits) $u_1$, $u_2$, ... entgegen. Das Eingabesignal U trägt beispielsweise eine zu übertragende Sprachnachricht. Es kann über eine Mikrophon-Verstärker-Analog/Digital-Umsetzer Schaltungskette (nicht dargestellt) erzeugt werden.

Der Codierer COD fügt dem digitalen Eingabesignal U zur Fehlerschutzcodierung Redundanz hinzu. Am Ausgang des Codierers COD liegt ein fehlerschutzcodiertes Datensignal D der Symbolfolge (Bits) $d_1$, $d_2$, ... vor.

Das fehlerschutzcodierte Datensignal D kann anschließend in nicht dargestellter Weise verschachtelt und in Blöcke vorgegebener Länge (Anzahl von Symbolen) unterteilt werden.

Ein Modulator MOD moduliert das fehlerschutzcodierte Datensignal D auf ein Trägersignal auf. Das mit dem fehlerschutzcodierten Datensignal modulierte Trägersignal wird in nicht dargestellter Weise von einem Sendefilter spektral geformt und von einem Sendeverstärker verstärkt, bevor es als Funksignal FS über die Sendeantenne SA abgestrahlt wird.

Der Empfänger weist eine Empfangsantenne EA, einen Demodulator DMOD und eine Decodiereinrichtung DECOD auf.

Die Empfangsantenne EA empfängt das durch Umgebungseinflüsse und Interferenz mit Funksignalen anderer Teilnehmer gestörte Funksignal FS und führt es dem Demodulator DMOD zu. Der Demodulator DMOD entzerrt das empfangene Funksignal FS unter Berücksichtigung der im Funkkanal erlittenen Signalstörungen. Das am Ausgang des Demodulators DMOD bereitgestellte entzerrte Datensignal D̃ liegt in Form einer Symbolfolge vor, deren Elemente $\tilde{d}_1$, $\tilde{d}_2$, ... wertekontinuierliche Schätzwerte der Symbole $d_1$, $d_2$, ... des fehlerschutzcodierten Datensignals D sind.

Das entzerrte Datensignal D̃ wird der Decodiereinrichtung DECOD zugeführt, an deren Ausgang ein decodiertes Ausgabesignal Û der Elemente $\hat{u}_1$, $\hat{u}_2$, ... bereitgestellt wird. Die Elemente $\hat{u}_1$, $\hat{u}_2$, ... des decodierten Ausgabesignals Û sind Hypothesen der Symbole $u_1$, $u_2$, ... des sendeseitigen Eingabesignals U in Form von diskreten Werten aus dem Symbolvorrat (beispielsweise 0,1) des Eingabesignals.

Die ausgangsseitige Bit-Fehlerrate wird durch die relative Häufigkeit von Fehlschätzungen $u_n \neq \hat{u}_n$, n = 1, 2, ... definiert. Sie darf bei Mobilfunkanwendungen in der Regel einen maximal zulässigen Wert nicht überschreiten.

Fig. 2 zeigt ein Blockschaltbild eines rekursiven systematischen Faltungscodierers RSC, wie er beispielsweise als Codierer COD im Sender S verwendet werden kann. Der Faltungscodierer RSC weist eingangsseitig einen ersten Addierer ADD1 und ein dem Addierer ADD1 nachgeschaltetes Schieberegister mit vier Zellen T auf. Der Faltungscodierer RSC weist einen ersten Ausgang auf, an dem er eine Datenfolge X ausgibt, deren Elemente $x_1$, $x_2$, ... identisch mit den Elementen $u_1$, $u_2$, ... der Eingabesignalfolge U sind. Codierer mit dieser Eigenschaft werden als systematische Codierer bezeichnet. An einem zweiten Ausgang stellt der Faltungscodierer RSC eine Redundanz-Datenfolge Y der Elemente $y_1$, $y_2$, ... bereit, die von einem zweiten Addierer ADD2 gebildet wird. Es wird deutlich, daß ein zu einem bestimmten Zeitpunkt am zweiten Ausgang vorliegendes Redundanzbit $y_n$ (n = 1, 2, ...) von dem aktuellen Eingangsbit $u_n$ der Eingabesignalfolge U abhängt.

Der in Fig. 2 dargestellte Faltungscodierer RSC erzeugt pro Eingabebit $u_n$ genau zwei Ausgabebits $x_n$ und $y_n$, d.h. er weist eine Coderate $R_c$ = (Anzahl von Eingabebits/Anzahl von Ausgangsbits) = 0,5 auf.

Bei Verwendung des in Fig. 2 gezeigten rekursiven systematischen Faltungscodierer RSC setzt sich das fehlerschutzcodierte Datensignal D (siehe Fig. 1) alternierend aus den Elementen der systematischen Datenfolge X und der Redundanz-Datenfolge Y zusammen, d.h. D = $(x_1, y_1, x_2, y_2, ...)$.

Als Codierer COD kann auch ein sogenannter Turbo-Codierer (nicht dargestellt) verwendet werden. Ein Turbo-Codierer besteht im wesentlichen aus zwei parallel geschalteten rekursiven systematischen Faltungscodierern RSC gemäß Fig. 2. Demzufolge stehen an seinem Ausgang die systematische Datenfolge X mit den Elementen $x_1$, $x_2$,... sowie zwei Redundanz-Teilfolgen Y1 und Y2 der Elemente $y1_n$ und $y2_n$, n = 1, 2, ... zur Verfügung. Um auch bei einem Turbo-Codierer eine Coderate $R_c$ = 0,5 zu erreichen, werden die beiden Redundanz-Teilfolgen Y1 und Y2 alternierend punktiert und multiplexiert. Die sich ergebende Redundanz-Datenfolge Y = $(y1_1, y2_2, y1_3, y2_4, ...$ ) wird dann in der bereits beschriebenen Weise alternierend mit der systematischen Datenfolge X multiplexiert. Das sich bei Turbocodierung ergebende fehlerschutzcodierte Datensignal D kann demzufolge die Form D = $(x_1, y1_1, x_2, y2_2, x_3, y1_3, x_4, y2_4, ...$ ) aufweisen.

Fig. 3 zeigt ein Blockschaltbild des empfängerseitigen Demodulators DMOD. Die Hochfrequenzstufe HF nimmt das von der Empfangsantenne EA empfangene Funksignal FS entgegen und wandelt es in üblicher Weise durch Heruntermischen in ein analoges Empfangssignal um. Das analoge Empfangssignal wird von einem Analog/ Digital-(A/D)-Umsetzer mit einer ausreichend hohen Abtastrate digitalisiert und gegebenenfalls mittels eines nachgeschalteten, digitalen Filters (nicht dargestellt) Bandbreiten-begrenzt.

Das digitale (ggf. Bandbreiten-begrenzte) Eingangsdatensignal wird sowohl einem Datendetektor DD als auch einem ersten Kanalschätzer KS1 zugeführt.

Die Aufgabe des ersten Kanalschätzers KS1 besteht darin, fortlaufend erste Kanalparameter h1, h2, ... zu ermitteln, die die aktuellen Übertragungseigenschaften des Funkkanals charakterisieren.

Die ersten Kanalparameter h1, h2, ... des Funkkanals können beispielsweise Parameter sein, die den funktionalen Verlauf der Kanalimpulsantwort h (d.h. die Antwort des Funkkanals zur Zeit t auf einem zur Zeit $(t - \tau)$ in den Kanal eingespeisten Dirac-Impuls) beschreiben.

Die Kanalschätzung in KS1 kann fortlaufend (anhand eines neben dem Funksignal FS ständig empfangenen Pilotsignals) oder zu bestimmten Zeitpunkten (anhand von eigens für die Kanalschätzung in das Funksignal FS eingebauten, dem Kanalschätzer bekannten Trainingssequenzen) durchgeführt werden.

Der Datendetektor DD berechnet aus dem ("gestörten") digitalen Eingangsdatensignal $\hat{d}$ mit Hilfe der ersten Kanalparameter h1, h2, ... das entzerrte Datensignal $\hat{D}$ in Form einer Folge von Elementen $(\hat{d}_1, \hat{d}_2, ...)$. Die Elemente $\hat{d}_n$ können entweder die diskreten Werte des Symbolvorrats der codierten Folge D umfassen (beispielsweise 0, 1) oder können wertekontinuierliche Schätzwerte (beispielsweise aus dem Intervall [0, 1]) für diese sein.

Der erste Kanalschätzer KS1 und der Datendetektor DD bilden zusammen einen Entzerrer.

Aufgrund der im folgenden zu erläuternden erfindungsgemäßen Zweit- oder Nachschätzung von Kanalparametern kann in dem Entzerrer ein vergleichsweise einfacher, suboptimaler Datendetektor DD zum Einsatz kommen. Beispielsweise kann der Datendetektor ein linearer Zero-Forcing-Blockentzerrer (ZF-BLE) oder ein linearer Minimum-Mean-Square-Error-Blockentzerrer (MMSE-BLE) sein. Diese beiden Datendetektoren DD erzielen anders als nichtlineare Datendetektoren DD zwar kein minimales Bit-Fehlerverhältnis, weisen jedoch den Vorteil auf, daß der ihnen zugrundeliegende Rechenalgorithmus sehr aufwandsgünstig (d.h. schnell) durchführbar ist.

Die einem ZF-BLE und einem MMSE-BLE zugrundeliegenden Rechenalgorithmen sind in dem Buch "Analyse und Entwurf digitaler Mobilfunksysteme" von P. Jung, Stuttgart, B.G. Teubner, 1997 in dem Kapitel 5.3 auf den Seiten 206 bis 224, insbesondere Kapitel 5.3.4 (Seiten 221 bis 224) detailliert erläutert. Sie werden hiermit durch Bezugnahme Gegenstand der vorliegenden Schrift.

Fig. 4 zeigt ein Blockschaltbild der in Fig. 1 dargestellten Decodiereinrichtung DECOD. Die Decodiereinrichtung DECOD umfaßt einen zweiten Kanalschätzer KS2, einen Demultiplexer DMUX1 sowie einen Decodierer, der im vorliegenden Beispiel (und unter der Voraussetzung, daß der sendeseitige Codierer COD ein Turbo-Codierer ist) als Turbo-Decodierer TDEC ausgeführt ist.

Sowohl dem zweiten Kanalschätzer KS2 als auch dem Demultiplexer DMUX1 wird das entzerrte Datensignal (Datenfolge $\hat{D}$) zugeführt. Der Demultiplexer DMUX1 teilt die Datenfolge $\hat{D}$ in ihren entzerrten systematischen Anteil (Datenfolge $\hat{X}$) und ihren entzerrten Redundanzanteil (Redundanzfolge $\hat{Y}$) auf.

In dem hier betrachteten Falle der Verwendung eines Turbo-Codierers für COD liegen der entzerrten Redundanzfolge $\hat{Y}$ die beiden senderseitig generierten, alternierenden punktierten Redundanz-Teilfolgen Y1, Y2 zugrunde, d.h. $\hat{D} = (\hat{x}_1, \hat{x1}_1, \hat{x}_2, \hat{y2}_2, \hat{x}_3, \hat{y1}_3, \hat{x}_4, \hat{y2}_4, ...)$.

Im folgenden wird ein in dem zweiten Kanalschätzer KS2 vorzugsweise verwendeter Algorithmus zur Berechnung von zweiten Kanalparametern beschrieben. Dieser Algorithmus wird als Verfahren der Momente (Method-of-moments) bezeichnet.

Der Einfluß des Funkkanals auf das übertragene fehlerschutzcodierte Datensignal kann in einem vereinfachten Modell des Funkkanals in folgender Weise geschrieben werden:

$$\hat{d}_n = \mu \cdot d_n + n_n \qquad \text{Gl. 1}$$

Dabei ist $\mu$ der Dämpfungsfaktor des Funkkanals und $n_n$ repräsentiert einen Störbeitrag aufgrund Kanalrauschens.

Unter der Annahme, daß die von dem Sender S erzeugten fehlerschutzcodierten Datensymbole $d_1, d_2, ...$ Realisierungen eines gleichverteilten Zufallsprozesses sind, ergibt sich für diesen Prozeß eine Wahrscheinlichkeitsdichte gemäß

$$w(\mu \cdot d_n) = \frac{1}{2} \delta(d_n - \mu) + \frac{1}{2} \delta(d_n + \mu) \qquad \text{Gl. 2}$$

wobei $\delta$ die Dirac-Delta-Distribution bezeichnet.

Unter der Modellannahme eines weißen Kanalrauschens mit einer Varianz $\sigma^2$ ist das Leistungsdichtespektrum des Rauschens durch

$$p(n_n) = \frac{1}{\sqrt{2 \cdot \pi \cdot \sigma^2}} \exp\left(-\frac{1}{2\sigma^2} n_n^2\right) \qquad \text{Gl. 3}$$

gegeben. Folglich ist die Leistungsdichte des empfangenen (entzerrten) Datensignals $\hat{D}$ durch den folgenden Ausdruck bestimmt:

$$p(\hat{d}_n) = w(\mu \cdot d_n) * p(n_n)$$
$$= \frac{1}{\sqrt{8 \cdot \pi \cdot \sigma^2}} \left\{\exp\left(-\frac{1}{2\sigma^2}(\hat{d}_n - \mu)^2\right) + \exp\left(-\frac{1}{2\sigma^2}(\hat{d}_n + \mu)^2\right)\right\} \qquad \text{Gl. 4}$$

Dabei bezeichnet * das Faltungsprodukt.

Das zweite statistische Moment $M_2$ der Leistungsdichteverteilung kann geschrieben werden als

$$M_2 = E\left\{(\hat{d}_n)^2\right\} = \int_{-\infty}^{\infty} (\hat{d}_n)^2 p(\hat{d}_n)\, d\hat{d}_n = \mu^2 + \sigma^2 \qquad \text{Gl. 5}$$

wobei E{} den Erwartungswert über eine vorgegebene Anzahl von Elementen (d.h. Realisierungen) der im Klammerausdruck stehenden Zufallsgröße bezeichnet.

Das vierte statistische Moment $M_4$ ergibt sich mit Gleichung 5 zu

$$M_4 = E\left\{(\hat{d}_n)^4\right\} = \int_{-\infty}^{\infty} (\hat{d}_n)^4 p(\hat{d}_n)\, d\hat{d}_n = \mu^4 + 6\mu^2\sigma^2 + 3\sigma^4 \qquad \text{Gl. 6}$$

Die von KS2 geschätzten Kanalparameter $\hat{\mu}$ und $\hat{\sigma}^2$ können dann aus dem entzerrten Datensignal $\hat{D}$ gemäß den folgenden Gleichungen '

$$\hat{\mu} = \sqrt[4]{\frac{3M_2^2 - M_4}{2}} = \sqrt[4]{\frac{3E\left\{(\hat{d}_n)^2\right\}^2 - E\left\{(\hat{d}_n)^4\right\}}{2}} \qquad \text{Gl. 7.1}$$

$$\hat{\sigma}^2 = M_2 - \sqrt{\frac{3M_2^2 - M_4}{2}} = E\left\{(\hat{d}_n)^2\right\} - \sqrt{\frac{3E\left\{(\hat{d}_n)^2\right\}^2 - E\left\{(\hat{d}_n)^4\right\}}{2}} \qquad \text{Gl. 7.2}$$

berechnet werden.

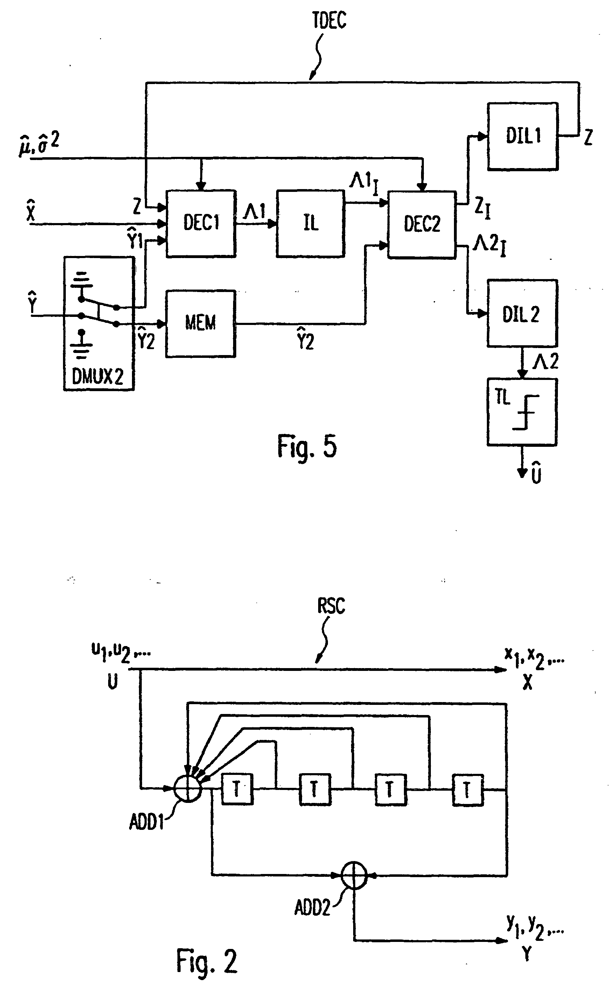

Fig. 5 zeigt den in Fig. 4 dargestellten Turbo-Decodierer TDEC im Detail.

Der Turbo-Decodierer TDEC umfaßt einen Demultiplexer DMUX2, einen Speicher MEM, einen ersten und zweiten Faltungsdecodierer DEC1 und DEC2, einen Verschachteler IL, einen ersten und einen zweiten Entschachteler DIL1 und DIL2 sowie eine Entscheidungslogik TL.

Von dem Demultiplexer DMUX1 werden dem Turbo-Decodierer TDEC die entzerrte systematische Datenfolge X (detektierte Version der Eingabefolge U (= X)) und die entzerrte Redundanzfolge Y (detektierte Version der in einem Turbo-Codierer von zwei rekursiven systematischen Codierern RSC erzeugten, punktierten Redundanz-Teilfolgen Y1, Y2) zugeführt. Der Demultiplexer DMUX2 spaltet die entzerrte Redundanzfolge Y in die beiden entzerrten Redundanz-Teilfolgen Y1 und Y2 auf.

Der erste Decodierer DEC1 berechnet aus $\hat{X}$ und $\hat{Y}1$ und einer Rückkopplungsfolge Z unter Verwendung der geschätzten zweiten Kanalparameter $\hat{\mu}$ und $\hat{\sigma}^2$ eine (Folge von) Zuverlässigkeitsinformation $\Lambda 1$. Bei jedem Element $\Lambda 1(u_n)$ der Folge $\Lambda 1$ handelt es sich um einen wertekontinuierlichen Schätzwert für ein Symbol (Bit) $u_1$, $u_2$, ... der Eingabefolge U.

Die Zuverlässigkeitsinformation $\Lambda 1$ wird von dem Verschachteler IL verschachtelt und als verschachtelte Zuverlässigkeitsinformation $\Lambda 1_I$ dem zweiten Faltungsdecodierer DEC2 zugeführt. Der zweite Faltungsdecodierer DEC2 berechnet aus der verschachtelten Zuverlässigkeitsinformation $\Lambda 1_I$ und Y2 unter Verwendung der zweiten (geschätzten) Kanalparameter $\hat{\mu}$ und $\hat{\sigma}^2$ eine verschachtelte Rückkopplungsfolge $Z_I$ und eine verschachtelte Folge $\Lambda 2_I$.

Die verschachtelte Rückkopplungsfolge $Z_I$ wird von dem ersten Entschachteler DIL1 entschachtelt und ergibt die Rückkopplungsfolge Z. Die Elemente $\Lambda 2_I(u_n)$ der Folge $\Lambda 2_I$ sind wertekontinuierliche a-posteriori-Wahrscheinlichkeitsverhältnisse (LLRs: Log-Likelyhood-Ratios) für die uncodierten Datensymbole $u_1$ bis $u_N$ der Eingangsfolge U:

$$\Lambda 2_I(u_n) = \log\left\{\frac{P(u_n = 1|\hat{X})}{P(u_n = 0|\hat{X})}\right\} \qquad \text{Gl. 8}$$

Dabei bezeichnet $P(u_n = 1|\hat{X})$ bzw. $P(u_n = 0|\hat{X})$ die bedingten Wahrscheinlichkeiten dafür, daß das Symbol $u_n$ gleich 1 bzw. gleich 0 ist unter der Bedingung, daß die entzerrte systematische Datenfolge X detektiert wurde.

Diese bedingten Wahrscheinlichkeiten sind "Wahrscheinlichkeiten a-posteriori", da von einem eingetretenen Ereignis (der detektierten Folge X) auf die Wahrscheinlichkeiten der diesem Ereignis zugrundeliegenden, uncodierten $u_1$ bis $u_N$ rückgeschlossen wird.

Die Folge $\Lambda 2_I$ wird von dem zweiten Entschachteler DIL2 entschachtelt und als entschachtelte Folge $\Lambda 2$ der Entscheidungslogik TL zugeführt. Die Entscheidungslogik TL bestimmt für jedes Element der Folge $\Lambda 2$ mit einem Wert $\leq 0$ ein rekonstruiertes Symbol $\hat{u}_n = 0$ und für jedes Element von $\Lambda 2$ mit einem Wert $> 0$ ein rekonstruiertes Bit $\hat{u}_n = 1$.

Die ersten und zweiten Faltungsdecodierer DEC1 bzw. DEC2 können in Form von MAP-Symbolschätzern realisiert sein. MAP-Symbolschätzer weisen den Vorteil auf, daß sie das geringstmögliche Bit-Fehlerverhältnis erzielen. Es können jedoch auch suboptimale Faltungsdecodierer DEC1, DEC2 verwendet werden, die bei einer vertretbaren Erhöhung des Bit-Fehlerverhältnisses einen deutlich geringeren Rechenaufwand erfordern.

Im folgenden wird erläutert, wie bei der erfindungsgemäßen "adaptiven" Decodierung die zweiten Kanalparameter $\hat{\mu}$ und $\hat{\sigma}^2$ in die Berechnung des decodierten Ausgabesignals $\hat{U}$ miteinbezogen werden. Die Erläuterungen beziehen sich dabei auf die Verwendung von MAP-Symbolschätzern als Faltungsdecodierer DEC1 bzw. DEC2. Eine detaillierte Beschreibung des der MAP-Symbolschätzung zugrundeliegenden Rechenalgorithmus ist in dem Kapitel E. 3.3 "Rekursive MAP-Symbolschätzung" des genannten Buchs von P. Jung auf den Seiten 353 bis 361 angegeben. Der dort angegebene Rechenalgorithmus wird hiermit durch Bezugnahme Gegenstand der vorliegenden Schrift.

Dem in Bezug genommenen Kapitel E.3.3 ist zu entnehmen, daß ein wichtiger Rechenschritt bei der Decodierung mittels MAP-Symbolschätzern die Berechnung von Metriken $\gamma^u(R_n, m'_T, m_T)$ gemäß Gleichung E.40 dieses Kapitels betrifft. Dabei bezeichnet $R_n$ ein Wertetripel $(x_n, y1_n, z_n)$ von systematischer Information, Redundanzinformation und Rekursionsinformation gemäß Gleichung E.31 des vorbezeichneten Kapitels, und $m'_T$ und $m_T$ bezeichnen zwei unterschiedliche Zustände des senderseitigen Faltungscodierers RSC in einem Trellis-Diagramm (der Faltungscodierer RSC kann als endlicher Automat aufgefaßt werden und seine Zustände können bekanntermaßen mit einem Trellis-Diagramm beschrieben werden).

Nach Gleichung E.51 des Kapitels E.3.3 geht in die Berechnung der Metriken $\gamma^{i,u}(R_n, m_T', m_T)$ die Varianz $\sigma^2$ des Kanalrauschens und der Dämpfungsfaktor des Funkkanals $\mu$ (in Kapitel E.3.3 als $\sigma_T^2$ und $a_{x,n}$ bzw. $a_{y,n}$ bezeichnet) ein.

Bei der Berechnung der Metriken $\gamma^{i,u}(R_n, m_T', m_T)$ wurden diese Parameter bisher als Konstanten vorgegeben.

Indem diese Parameter nunmehr im Rahmen der erfindungsgemäßen Kanalnachschätzung ermittelt und sowohl dem ersten als auch dem zweiten Faltungsdecodierer DEC1, DEC2 von dem zweiten Kanalschätzer KS2 in fortlaufend aktualisierter Form zur Verfügung gestellt werden, liefert sowohl der erste als auch der zweite Faltungsdecodierer DEC1, DEC2 an seinem Ausgang an den momentanen Zustand des Funkkanals angepaßte Berechnungswerte.

Durch diese "adaptive" Decodierung wird das Bit-Fehlerverhältnis des Ausgabesignals Ü der Decodiereinrichtung DECOD wesentlich verbessert. Dadurch wird eine erhöhte Übertragungsqualität bei gleichem Rechenaufwand wie bisher oder - hierzu äquivalent - ein geringerer Rechenaufwand für eine gleiche Übertragungsqualität wie bisher erreicht.


**Patentansprüche**

1. Verfahren zur Entzerrung und Decodierung eines über einen Funkkanal übertragenen fehlerschutzcodierten Datensignals (D), das die Schritte aufweist:

   - Empfangen eines Funksignals (FS), das das senderseitig fehlerschutzcodierte Datensignal (D) überträgt;
   - Abtasten des empfangenen Funksignals (FS) zur Erzeugung eines digitalen Eingangsdatensignals;
   - Zuführen des digitalen Eingangsdatensignals zu einem adaptiven Entzerrer (KS1, DD), der einen ersten Kanalschätzer (KS1) aufweist, welcher wiederholt erste Kanalparameter (h1, h2, ...) des Funkkanals ermittelt, und wobei der Entzerrer (KS1, DD) anhand der aktuell ermittelten ersten Kanalparameter (h1, h2, ...) ein entzerrtes Datensignal (D̂) berechnet und ausgibt;
   - Decodieren des entzerrten Datensignals (D̂) in einem Decodierer (TDEC) zur Ermittlung eines decodierten Ausgabesignals (Û), das eine Rekonstruktion eines dem senderseitig fehlerschutzcodierten Datensignal (D) zugrundeliegenden Eingabesignals (U) ist; **dadurch gekennzeichnet, daß**
   - das entzerrte Datensignal (D̂) einem zweiten Kanalschätzer (KS2) zugeführt wird, welcher wiederholt zweite Kanalparameter umfassend die Varianz ($\hat{\sigma}^2$) des Funkkanalrauschens und den Dämpfungsfaktor ($\hat{\mu}$) des Funkkanals mittels des Verfahrens der Momente berechnet, und
   - die zweiten Kanalparameter ($\hat{\mu}, \hat{\sigma}^2$) dem Decodierer (TDEC) zugeführt und dort als Rechenparameter bei der Decodierung zur Berechnung des Ausgabesignals (Û) verwendet werden.


2. Verfahren nach Anspruch 1,
   **dadurch gekennzeichnet,**
   **daß** der Codierung und Decodierung ein Turbocode zugrunde liegt.


3. Verfahren zur Entzerrung und Decodierung eines über einen Funkkanal übertragenen, mit einem Turbocode fehlerschutzcodierten Datensignals (D), das die Schritte aufweist:

   - Empfangen eines Funksignals (FS), das das senderseitig fehlerschutzcodierte Datensignal (D) überträgt;
   - Abtasten des empfangenen Funksignals (FS) zur Erzeugung eines digitalen Eingangsdatensignals;
   - zuführen des digitalen Eingangsdatensignals zu einem adaptiven Entzerrer (KS1, DD), der einen ersten Kanalschätzer (KS1) aufweist, welcher wiederholt erste Kanalparameter (h1, h2, ...) des Funkkanals ermittelt, und wobei der Entzerrer (KS1, DD) anhand der aktuell ermittelten ersten Kanalparameter (h1, h2, ...) ein entzerrtes Datensignal (D̂) berechnet und ausgibt;
   - Decodieren des entzerrten Datensignals (D̂) in einem Turbodecodierer (TDEC) zur Ermittlung eines decodierten Ausgabesignals (Û), das eine Rekonstruktion eines dem senderseitig fehlerschutzcodierten Datensignal (D) zugrundeliegenden Eingabesignals (U) ist; **dadurch gekennzeichnet, daß**
   - das entzerrte Datensignal (D̂) einem zweiten Kanalschätzer (KS2) zugeführt wird, welcher wiederholt zweite Kanalparameter ($\hat{\mu}, \hat{\sigma}^2$) des Funkkanals ermittelt, und
   - die zweiten Kanalparameter ($\hat{\mu}, \hat{\sigma}^2$) dem Turbodecodierer (TDEC) zugeführt und dort als Rechenparameter bei der Turbo-Decodierung zur Berechnung des Ausgabesignals (Û) verwendet werden.

**4.** Verfahren nach Anspruch 3,
**dadurch gekennzeichnet,**
**daß** die zweiten Kanalparameter die Varianz ($\hat{\sigma}^2$) des Funkkanalrauschens und den Dämpfungsfaktor ($\hat{\mu}$) des Funkkanals umfassen.

**5.** Verfahren nach Anspruch 4,
**dadurch gekennzeichnet,**
**daß** die zweiten Kanalparameter ($\hat{\mu}$, $\hat{\sigma}^2$) mittels des Verfahrens der Momente berechnet werden.

**6.** Verfahren nach einem der vorhergehenden Ansprüche,
**dadurch gekennzeichnet,**
**daß** eine lineare ZF-BLE- oder MMSE-BLE-Entzerrung durchgeführt wird.

**7.** Einrichtung zur Entzerrung und Decodierung eines über einen Funkkanal übertragenen fehlerschutzcodierten Datensignals (D),

- mit einem einen ersten Kanalschätzer (KS1) umfassenden adaptiven Entzerrer (KS1, DD),

   - - wobei der Entzerrer (KS1, DD) ein digitales Eingangsdatensignal, welches durch Abtastung eines empfangenen, das senderseitig fehlerschutzcodierte Datensignal (D) übertragenden Funksignals (FS) erzeugbar ist, entgegennimmt,
   - - der erste Kanalschätzer (KS1) wiederholt erste Kanalparameter (h1, h2, ...) des Funkkanals ermittelt, und
   - - der Entzerrer (KS1, DD) anhand der ermittelten ersten Kanalparameter (h1, h2, ...) ein entzerrtes Datensignal (D) berechnet und ausgibt,

- mit einem das entzerrte Datensignal ($\hat{D}$) entgegennehmenden Decodierer (TDEC) zur Ermittlung eines decodierten Ausgabesignals (Û), das eine Rekonstruktion eines dem senderseitig fehlerschutzcodierten Datensignal (D) zugrundeliegenden Eingabesignals (U) ist, und **dadurch gekennzeichnet, daß**
- mit einem zweiten Kanalschätzer (KS2), dem das entzerrte Datensignal (D) zugeführt wird und der wiederholt zweite Kanalparameter umfassend die Varianz ($\hat{\sigma}^2$) des Funkkanalrauschens und den Dämpfungsfaktor ($\hat{\mu}$) des Funkkanals nach dem Algorithmus des Verfahrens der Momente ermittelt, welche dem Decodierer (TDEC) zur Berechnung des Ausgabesignals (Û) zugeleitet werden.

**8.** Einrichtung nach Anspruch 7,
**dadurch gekennzeichnet,**
**daß** der Decodierer (TDEC) ein Turbodecodierer ist.

**9.** Einrichtung zur Entzerrung und Decodierung eines über einen Funkkanal übertragenen, mit einem Turbocode fehlerschutzcodierten Datensignals (D),

- mit einem einen ersten Kanalschätzer (KS1) umfassenden adaptiven Entzerrer (KS1, DD),

   - - wobei der Entzerrer (KS1, DD) ein digitales Eingangsdatensignal, welches durch Abtastung eines empfangenen, das senderseitig fehlerschutzcodierte Datensignal (D) übertragenden Funksignals (FS) erzeugbar ist, entgegennimmt,
   - - der erste Kanalschätzer (KS1) wiederholt erste Kanalparameter (h1, h2, ...) des Funkkanals ermittelt, und
   - - der Entzerrer (KS1, DD) anhand der ermittelten ersten Kanalparameter (h1, h2, ...) ein entzerrtes Datensignal (D) berechnet und ausgibt,

- mit einem das entzerrte Datensignal ($\hat{D}$) entgegennehmenden Turbodecodierer (TDEC) zur Ermittlung eines decodierten Ausgabesignals (Û), das eine Rekonstruktion eines dem senderseitig fehlerschutzcodierten Datensignal (D) zugrundeliegenden Eingabesignals (U) ist, und **dadurch gekennzeichnet, daß**
- mit einem zweiten Kanalschätzer (KS2), dem das entzerrte Datensignal (D) zugeführt wird und der wiederholt zweite Kanalparameter ($\hat{\mu}$, $\hat{\sigma}^2$) des Funkkanals ermittelt, welche dem Turbodecodierer (TDEC) zur Berechnung des Ausgabesignals (Û) zugeleitet werden.

**10.** Einrichtung nach Anspruch 9,
**dadurch gekennzeichnet,**

**daß** der zweite Kanalschätzer (KS2) die Varianz ($\hat{\sigma}^2$) des Funkkanalrauschens und den Dämpfungsfaktor ($\hat{\mu}$) des Funkkanals schätzt.

11. Einrichtung nach Anspruch 10,
    **dadurch gekennzeichnet,**
    **daß** der zweite Kanalschätzer (KS2) nach dem Algorithmus des Verfahrens der Momente arbeitet.

12. Einrichtung nach einem der Ansprüche 7 bis 11,
    **dadurch gekennzeichnet,**
    **daß** der Entzerrer (KS1, DD) ein linearer ZF-BLE oder MMSE-BLE ist.

**Claims**

1. Method for equalizing and decoding an error-protection-coded data signal (D) transmitted via a radio channel, having the following steps:

   - receiving a radio signal (FS) which transmits the data signal (D) error-protection-coded at the transmitter end;
   - sampling the received radio signal (FS) to generate a digital input data signal;
   - feeding the digital input data signal to an adaptive equalizer (KS1, DD) which has a first channel estimator (KS1) which repeatedly determines first channel parameters (h1, h2,...) of the radio channel, the equalizer (KS1, DD) using the currently determined first channel parameters (h1, h2,...) to calculate and output an equalized data signal (D);
   - decoding the equalized data signal ($\hat{D}$) in a decoder (TDEC) in order to determine a decoded output signal (Û) which is a reconstruction of an input signal (U) on which the data signal (D) error-protection-coded at the transmitter end is based; **characterized in that**
   - the equalized data signal (D) is fed to a second channel estimator (KS2) which repeatedly calculates second channel parameters comprising the variance ($\sigma^2$) of the radio channel noise and the damping factor ($\hat{\mu}$) of the radio channel by means of the method of moments, and
   - the second channel parameters ($\mu, \sigma^2$) is fed to the decoder (TDEC) and used there as computing parameters in the decoding for calculating the output signal (Û).

2. Method according to Claim 1, **characterized in that** the coding and decoding are based on a turbo code.

3. Method for equalizing and decoding a data signal (D) transmitted via a radio channel and error-protection-coded with the aid of a turbo code, having the following steps:

   - receiving a radio signal (FS) which transmits the data signal (D) error-protection-coded at the transmitter end;
   - sampling the received radio signal (FS) to generate a digital input data signal;
   - feeding the digital input data signal to an adaptive equalizer (KS1, DD) which has a first channel estimator (KS1) which repeatedly determines first channel parameters (h1, h2,...) of the radio channel, the equalizer (KS1, DD) using the currently determined first channel parameters (h1, h2,...) to calculate and output an equalized data signal (D);
   - decoding the equalized data signal ($\hat{D}$) in a turbo decoder (TDEC) in order to determine a decoded output signal (Û) which is a reconstruction of an input signal (U) on which the data signal (D) error-protection-coded at the transmitter end is based; **characterized in that**
   - the equalized data signal (D) is fed to a second channel estimator (KS2) which repeatedly determines second channel parameters ($\mu, \sigma^2$) of the radio channel, and
   - the second channel parameters ($\mu, \sigma^2$) is fed to the turbo decoder (TDEC) and used there as computing parameters in the turbo decoding for calculating the output signal (Û).

4. Method according to Claim 3, **characterized in that** the second channel parameters comprise the variance ($\hat{\sigma}^2$) of the radio channel noise, and the damping factor ($\mu$) of the radio channel.

5. Method according to Claim 4, **characterized in that** the second channel parameters ($\hat{\mu}, \hat{\sigma}^2$) are calculated by means of the method of moments.

6. Method according to one of the preceding claims, **characterized in that** linear ZF-BLE equalization or MMSE-BLE equalization is carried out.

7. Device for equalizing and decoding an error-protection-coded data signal (D) transmitted via a radio channel,

- having an adaptive equalizer (KS1, DD) comprising a first channel estimator (KS1),

 - - the equalizer (KS1, DD) accepting a digital input data signal which can be generated by sampling a received radio signal (FS) transmitting the data signal (D) error-protection-coded at the transmitter end,
 - - the first channel estimator (KS1) repeatedly determining first channel parameters (h1, h2,...) of the radio channel, and
 - - the equalizer (KS1, DD) calculating and outputting an equalized data signal ($\hat{D}$) with the aid of the determined first channel parameters (h1, h2,...),

- having a decoder (TDEC), accepting the equalized data signal ($\hat{D}$), for determining a decoded output signal (D) which is a reconstruction of an input signal (U) on which the data signal (D) error-protection-coded at the transmitter end is based, and **characterized in that**
- having a second channel estimator (KS2) to which the equalized data signal ($\hat{D}$) is fed and which repeatedly determines second channel parameters comprising the variance ($\sigma^2$) of the radio channel noise and the damping factor ($\mu$) of the radio channel using the algorithm of the method of moments, which are supplied to the decoder (TDEC) in order to calculate the output signal ($\hat{U}$).

8. Device according to Claim 7, **characterized in that** the decoder (TDEC) is a turbo decoder.

9. Device for equalizing and decoding a data signal (D) transmitted via a radio channel and error-protection-coded with the aid of a turbo code,

- having an adaptive equalizer (KS1, DD) comprising a first channel estimator (KS1),

 - - the equalizer (KS1, DD) accepting a digital input data signal which can be generated by sampling a received radio signal (FS) transmitting the data signal (D) error-protection-coded at the transmitter end,
 - - the first channel estimator (KS1) repeatedly determining first channel parameters (h1, h2,...) of the radio channel, and
 - - the equalizer (KS1, DD) calculating and outputting an equalized data signal ($\hat{D}$) with the aid of the determined first channel parameters on (h1, h2,...),

- having a decoder (TDEC), accepting the equalized data signal ($\hat{D}$), for determining a decoded output signal (D) which is a reconstruction of an input signal (U) on which the data signal (D) error-protection-coded at the transmitter end is based, and **characterized in that**
- having a second channel estimator KS2) to which the equalized data signal ($\hat{D}$) is fed and which repeatedly determines second channel parameters ($\mu$, $\sigma^2$) of the radio channel, which are supplied to the turbo decoder (TDEC) in order to calculate the output signal ($\hat{U}$).

10. Device according to Claim 9, **characterized in that** the second channel estimator (KS2) estimates the variance ($\hat{\sigma}^2$) of the radio channel noise, and the damping factor ($\mu$) of the radio channel.

11. Device according to Claim 10, **characterized in that** the second channel estimator (KS2) operates using the algorithm of the method of moments.

12. Device according to one of claims 7 to 11, **characterized in that** the equalizer (KS1, DD) is a linear ZF-BLE or MMSE-BLE.

**Revendications**

1. Procédé pour l'égalisation et le décodage d'un signal de données (D) transmis via un canal radio et codé pour être protégé contre les erreurs, qui comprend les étapes suivantes :

 - réception d'un signal radio (FS) qui transmet le signal de données (D) codé côté émetteur pour être protégé contre les erreurs ;
- échantillonnage du signal radio reçu (FS) pour produire un signal de données d'entrée numérique ;
- envoi du signal de données d'entrée numérique à un égaliseur adaptatif (KS1, DD) qui comporte un premier estimateur de canal (KS1) qui détermine de façon répétée des premiers paramètres de canal (h1, h2, ...) du canal radio, l'égaliseur (KS1, DD) calculant un signal de données égalisé (D) à l'aide des premiers paramètres de canal (h1, h2, ...) actuellement déterminés et le délivrant en sortie ;
- décodage du signal de données égalisé (D) dans un décodeur (TDEC) pour déterminer un signal de sortie décodé (Û) qui est une reconstruction d'un signal d'entrée (U) à la base du signal de données (D) codé côté émetteur pour être protégé contre les erreurs ;

**caractérisé par le fait que**

- on envoie le signal de données égalisé ($\hat{D}$) à un deuxième estimateur de canal (KS2) qui calcule de façon répétée des deuxièmes paramètres de canal comprenant la variance ($\hat{\sigma}^2$) du bruit de canal radio et le facteur d'affaiblissement ($\hat{\mu}$) du canal radio au moyen du procédé des moments, et
- on envoie les deuxièmes paramètres de canal ($\hat{\mu}$, $\delta^2$) au décodeur (TDEC) et on les y utilise comme paramètres de calcul lors du décodage pour le calcul du signal de sortie (Û).

2. Procédé selon la revendication 1,
   **caractérisé par le fait que** le codage et le décodage sont basés sur un turbocode.

3. Procédé pour l'égalisation et le décodage d'un signal de données (D) transmis via un canal radio et codé avec un turbocode pour être protégé contre les erreurs, qui comprend les étapes suivantes :

   - réception d'un signal radio (FS) qui transmet le signal de données (D) codé côté émetteur pour être protégé contre les erreurs ;
   - échantillonnage du signal radio reçu (FS) pour produire un signal de données d'entrée numérique ;
   - envoi du signal de données d'entrée numérique à un égaliseur adaptatif (KS1, DD) qui comporte un premier estimateur de canal (KS1) qui détermine de façon répétée des premiers paramètres de canal (h1, h2, ...) du canal radio, l'égaliseur (KS1, DD) calculant un signal de données égalisé (D) à l'aide des premiers paramètres de canal (h1, h2, ...) actuellement déterminés et le délivrant en sortie ;
   - décodage du signal de données égalisé (D) dans un turbodécodeur (TDEC) pour déterminer un signal de sortie décodé (Û) qui est une reconstruction d'un signal d'entrée (U) à la base du signal de données (D) codé côté émetteur pour être protégé contre les erreurs ;

   **caractérisé par le fait que**

   - on envoie le signal de données égalisé ($\hat{D}$) à un deuxième estimateur de canal (KS2) qui calcule de façon répétée des deuxièmes paramètres de canal ($\hat{\mu}$, $\hat{\sigma}^2$) du canal radio, et
   - on envoie les deuxièmes paramètres de canal ($\hat{\mu}$, $\sigma^2$) au turbodécodeur (TDEC) et on les y utilise comme paramètres de calcul lors du turbodécodage pour le calcul du signal de sortie (Û).

4. Procédé selon la revendication 3,
   **caractérisé par le fait que** les deuxièmes paramètres de canal comprennent la variance ($\hat{\sigma}^2$) du bruit de canal radio et le facteur d'affaiblissement ($\hat{\mu}$) du canal radio.

5. Procédé selon la revendication 4,
   **caractérisé par le fait qu'**on calcule les deuxièmes paramètres de canal ($\hat{\mu}$, $\hat{\sigma}^2$) au moyen du procédé des moments.

6. Procédé selon l'une des revendications précédentes,
   **caractérisé par le fait qu'**on réalise une égalisation linéaire ZF-BLE (égalisation de bloc avec Zero Forcing) ou MMSE-BLE (égalisation de bloc avec Minimum Mean Square Error).

7. Dispositif pour l'égalisation et le décodage d'un signal de données (D) transmis via un canal radio et codé pour être protégé contre les erreurs,

   - comprenant un égaliseur adaptatif (KS1, DD) comprenant un premier estimateur de canal (KS1),

  -- l'égaliseur (KS1, DD) recevant un signal de données d'entrée numérique qui peut être produit par échantillonnage d'un signal radio reçu (FS) transmettant le signal de données (D) codé côté émetteur pour être protégé contre les erreurs,

  -- le premier estimateur de canal (KS1) déterminant de façon répétée des premiers paramètres de canal (h1, h2, ...) du canal radio, et

  -- l'égaliseur (KS1, DD) calculant un signal de données égalisé ($\hat{D}$) à l'aide des premiers paramètres de canal déterminés (h1, h2, ...) et le délivrant en sortie,

- comprenant un décodeur (TDEC) qui reçoit le signal de données égalisé ($\hat{D}$) pour déterminer un signal de sortie décodé ($\hat{U}$) qui est une reconstruction d'un signal d'entrée (U) à la base du signal de données (D) codé côté émetteur pour être protégé contre les erreurs, et

    **caractérisé par**

- un deuxième estimateur de canal (KS2) auquel le signal de données égalisé ($\hat{D}$) est envoyé et qui détermine de façon répétée des deuxièmes paramètres de canal comprenant la variance ($\sigma^2$) du bruit de canal radio et le facteur d'affaiblissement ($\hat{\mu}$) du canal radio selon l'algorithme du procédé des moments, lesquels paramètres sont envoyés au décodeur (TDEC) pour le calcul du signal de sortie ($\hat{U}$).

**8.** Dispositif selon la revendication 7,
    **caractérisé par le fait que** le décodeur (TDEC) est un turbodécodeur.

**9.** Dispositif pour l'égalisation et le décodage d'un signal de données (D) transmis via un canal radio et codé avec un turbocode pour être protégé contre les erreurs,

- comprenant un égaliseur adaptatif (KS1, DD) comprenant un premier estimateur de canal (KS1),

  - - l'égaliseur (KS1, DD) recevant un signal de données d'entrée numérique qui peut être produit par échantillonnage d'un signal radio reçu (FS) transmettant le signal de données (D) codé côté émetteur pour être protégé contre les erreurs,

  - - le premier estimateur de canal (KS1) déterminant de façon répétée des premiers paramètres de canal (h1, h2, ...) du canal radio, et

  - l'égaliseur (KS1, DD) calculant un signal de données égalisé ($\hat{D}$) à l'aide des premiers paramètres de canal déterminés (h1, h2, ...) et le délivrant en sortie,

- comprenant un turbodécodeur (TDEC) qui reçoit le signal de données égalisé ($\hat{D}$) pour déterminer un signal de sortie décodé ($\hat{U}$) qui est une reconstruction d'un signal d'entrée (U) à la base du signal de données (D) codé côté émetteur pour être protégé contre les erreurs, et

    **caractérisé par**

- un deuxième estimateur de canal (KS2) auquel le signal de données égalisé ($\hat{D}$) est envoyé et qui détermine de façon répétée des deuxièmes paramètres de canal ($\hat{\mu}$, $\sigma^2$) du canal radio qui sont envoyés au turbodécodeur (TDEC) pour le calcul du signal de sortie ($\hat{U}$).

**10.** Dispositif selon la revendication 9,
    **caractérisé par le fait que** le deuxième estimateur de canal (KS2) estime la variance ($\hat{\sigma}^2$) du bruit de canal radio et le facteur d'affaiblissement ($\hat{\mu}$) du canal radio.

**11.** Dispositif selon la revendication 10,
    **caractérisé par le fait que** le deuxième estimateur de canal (KS2) travaille selon l'algorithme du procédé des moments.

**12.** Dispositif selon l'une des revendications 7 à 11,
    **caractérisé par le fait que** l'égaliseur (KS1, DD) est un égaliseur linéaire ZF-BLE (égaliseur de bloc avec Zero Forcing) ou MMSE-BLE (égaliseur de bloc avec Minimum Mean Square Error).

Fig. 1

Fig. 3

Fig. 4

EP 1 151 571 B1

Fig. 5

Fig. 2